# EUROPEAN PATENT APPLICATION

(11) **EP 2 725 813 A2**
(43) Date of publication of application: **30.04.2014**
(21) Application number: 13189528.6
(22) Date of filing: 21.10.2013
(51) Int. Cl.: H04N 21/418, H04H 60/14, H04N 21/43, H04N 21/4425

(54) **Broadcasting signal receiving apparatus and control method thereof**

(30) Priority: 26.10.2012 KR 20120119566
(71) Applicant: Samsung Electronics Co., Ltd, Gyeonggi-do 443-742 (KR)
(72) Inventor: Woo, Jun-hee, Seoul (KR)
(74) Representative: Walaski, Jan Filip

(57) **Abstract**

A broadcasting signal receiving apparatus and a control method thereof, the broadcasting signal receiving apparatus including a signal receiver which receives a broadcasting signal, a signal processor which processes the received broadcasting signal, an interface to which a conditional access module (CAM) that descrambles a scrambled broadcasting signal is connected, and a controller which, if the connection of the CAM through the interface is detected, monitors the broadcasting signal transmitted by the CAM, and if a noise occurs from the broadcasting signal transmitted by the CAM, controls the signal processor to adjust a timing of at least one of a clock signal and a data signal included in the broadcasting signal. Thus, the noise due to the CAM may automatically be compensated and prevent performance of unnecessary compensation process.

## Description

The present invention relates to a broadcasting signal receiving apparatus and a control method thereof, and more particularly, to a broadcasting signal receiving apparatus and a control method thereof to which a conditional access module that descrambles a scrambled broadcasting signal is connected.

A broadcasting signal receiving apparatus such as a television (TV) processes broadcasting signals/image data supplied by various external image supply sources or stored therein, and displays an image on a display panel based on the processed signals/data. A TV is an example of the broadcasting signal receiving apparatus provided to general users. For example, the broadcasting signal receiving apparatus which is implemented as a TV provides an image of a desired broadcasting channel based on a broadcasting signal transmitted from the outside.

Digital broadcasting channels may be classified as free channel broadcasting and charged channel broadcasting. For example, the charged channel broadcasting may descramble scrambled broadcasting by a conditional access system (CAS) or common interface (CI) to provide a user with broadcasting.

The CAS may be installed in a digital set-top box so that a user may view an encoded charged channel broadcasting only when he/she pays certain amount for the broadcasting. For example, the Korean digital cable broadcasting industry has adopted the CAS.

The CI is mainly used in EU, and has a conditional access module (CAM) implemented as a separate module from the broadcasting signal receiving apparatus. The CAM has the CAS function that enables a user to view a charged channel broadcasting. If a user inserts the CAM with a smart card into the CI, scrambled transport stream (TS) is transmitted to the CAM through the CI after a subscriber certification process, and the CAM descrambles the scrambled TS and transmits the descrambled TS to the broadcasting signal receiving apparatus.

There are various types of CAMs and smart cards depending on manufacturers, and noise may occur from an output broadcasting signal depending on a margin of a clock signal and a data signal of the broadcasting signal included in the broadcasting signal.

To solve the noise problem, a conventional apparatus changes a margin value of the broadcasting signal transmitted by the CAM in the hardware.

However, in such case, there is limitation in solving problems arising from various types of CAMs due to the circuit effect of the TV. Further, as the margin value is changed from a buffer before a decoder, it is hard to solve the problem of the CAM itself.

The foregoing and/or other aspects may be achieved by providing a broadcasting signal receiving apparatus including a signal receiver which receives a broadcasting signal, a signal processor which processes the received broadcasting signal, an interface to which a conditional access module (CAM) that descrambles a scrambled broadcasting signal is connected, and a controller which, if the connection of the CAM through the interface is detected, monitors the broadcasting signal transmitted by the CAM, and if a noise occurs from the broadcasting signal transmitted by the CAM, controls the signal processor to adjust a timing of at least one of a clock signal and a data signal included in the broadcasting signal.

The signal processor may include a demodulator which demodulates a broadcasting signal received by the signal receiver, and a decoder which decodes the demodulated broadcasting signal, and the controller may control the interface to transmit the broadcasting signal demodulated by the demodulator, to the CAM, and to receive the descrambled broadcasting signal from the CAM, and control the decoder to decode the broadcasting signal transmitted by the CAM.

The controller may determine through the broadcasting signal processed by the decoder whether any noise occurs from the broadcasting signal transmitted by the CAM, and if any error occurs from the decoder, adjust a timing of the broadcasting signal processed by the demodulator.

The broadcasting signal receiving apparatus may further include a display unit which displays an image thereon based on the broadcasting signal processed by the signal processor.

If any noise occurs from the broadcasting signal transmitted by the CAM, the controller may control the display unit to display a message thereon showing the occurrence of the error from the CAM.

The controller may further determine whether any noise occurs from the broadcasting signal received by the signal receiver.

The controller may use the broadcasting signal processed by the demodulator to determine whether any noise occurs from the broadcasting signal received by the signal receiver.

The controller may control the display unit to display thereon a message showing an occurrence of the error from the broadcasting signal received by the signal receiver if the error occurs from the demodulator.

If any noise occurs from the broadcasting signal transmitted by the CAM, the controller may control the interface to reset the CAM.

The controller may monitors the broadcasting signal transmitted by the CAM until no noise occurs from the broadcasting signal.

The broadcasting signal receiving apparatus may further include a storage unit, and if it is monitored that no noise occurs from the broadcasting signal whose timing has been adjusted, the controller may store a corresponding timing value in the storage unit.

The controller may alternately adjust the timing and resets the CAM until no noise occurs from the broadcasting signal transmitted by the CAM.

The foregoing and/or other aspects may be achieved by providing a control method of a broadcasting signal receiving apparatus, the control method including detecting a connection of a conditional access module (CAM) which descrambles a scrambled broadcasting signal, receiving a broadcasting signal, transmitting the received broadcasting signal to the CAM, receiving the descrambled broadcasting signal from the CAM, monitoring the broadcasting signal transmitted by the CAM, and adjusting a timing of at least one of a clock signal and a data signal included in the broadcasting signal if any noise occurs from the broadcasting signal transmitted by the CAM.

The control method may further include demodulating the received broadcasting signal; and decoding the broadcasting signal transmitted by the CAM.

The control method may further include displaying an image based on the broadcasting signal.

The control method may further include determining whether any noise occurs from the broadcasting signal transmitted by the conditional access module by using a broadcasting signal processed by a decoder, and the adjusting the timing may include adjusting a timing of a broadcasting signal processed by the demodulator if any error occurs from the decoder.

The control method may further include displaying a message showing an occurrence of an error from the CAM if any noise occurs from the broadcasting signal transmitted by the CAM.

The control method may further include determining whether any noise occurs from a broadcasting signal received by a signal receiver by using a broadcasting signal processed by the demodulator.

The control method may further include displaying a message showing an occurrence of an error from the broadcasting signal received by the signal receiver if the error occurs from the demodulator.

The adjusting the timing may further include resetting the CAM.

The monitoring may include monitoring the broadcasting signal transmitted by the CAM until no noise occurs from the broadcasting signal.

The control method may further include, if it is monitored that no noise has occurred from the broadcasting signal whose timing is adjusted, storing a corresponding timing value.

The adjusting the timing may include alternately adjusting the timing and resetting the CAM until no noise occurs from the broadcasting signal transmitted by the CAM.

The above and/or other aspects will become apparent and more readily appreciated from the following description of exemplary embodiments, taken in conjunction with the accompanying drawings, in which:
FIG. 1 illustrates an example of inserting a conditional access module to a broadcasting signal receiving apparatus according to an embodiment;
FIG. 2 is a block diagram of the broadcasting signal receiving apparatus according to an embodiment;
FIGS. 3 and 5 illustrate examples of a message displayed by the broadcasting signal receiving apparatus according to an embodiment;
FIG. 4 illustrates an example of a waveform of a broadcasting signal which is compensated for by a demodulator of the broadcasting signal receiving apparatus according to an embodiment;
FIG. 6 is a flowchart showing a control method of the broadcasting signal receiving apparatus according to an embodiment; and
FIG. 7 is a flowchart showing a control method of a broadcasting signal receiving apparatus according to another embodiment.

Below, exemplary embodiments will be described in detail with reference to accompanying drawings so as to be easily realized by a person having ordinary knowledge in the art. Exemplary embodiments may be embodied in various forms without being limited to exemplary embodiments set forth herein. Descriptions of well-known parts are omitted for clarity, and like reference numerals refer to like components throughout.

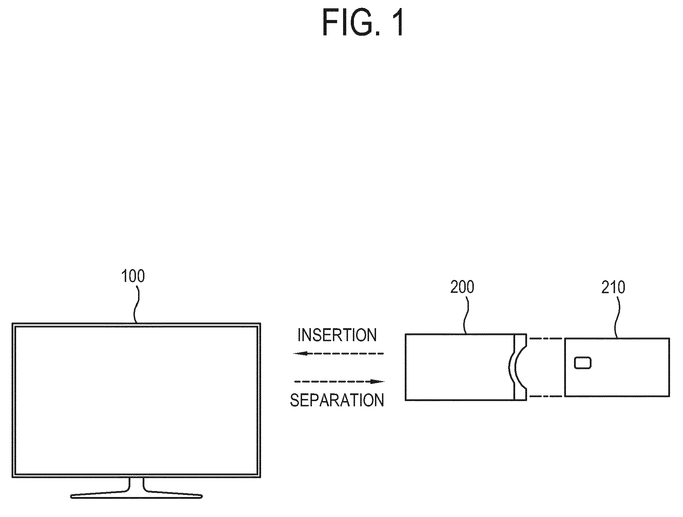

FIG. 1 illustrates an example of inserting a conditional access module (hereinafter, to be also called CAM) 200 into a broadcasting signal receiving apparatus 100 according to an embodiment.

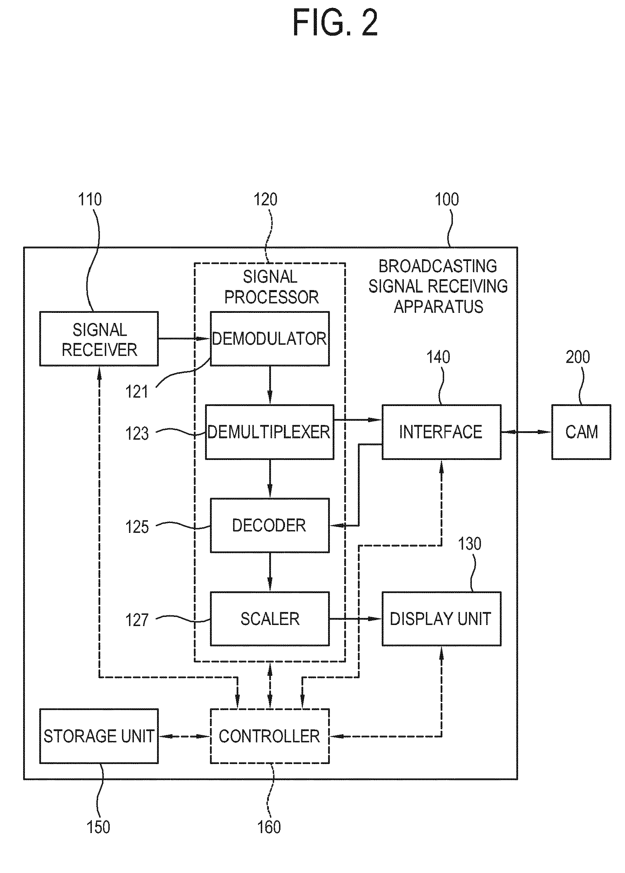

As shown therein, the conditional access module 200 is detachably inserted into the broadcasting signal receiving apparatus 100 according an embodiment. A smart card 210 is installed in the CAM 200, and the broadcasting signal receiving apparatus 100 is connected to the CAM 200 for mutual communication by an interface 140 (See FIG. 2) such as a common interface (CI). However, the present disclosure is not limited thereto. The CAM 200 may be integrated into the broadcasting signal receiving apparatus 100 or wired or wirelessly connected.

The CAM 200 may receive encoded, i.e., scrambled broadcasting signal in the form of transport stream (TS) from the broadcasting signal receiving apparatus 100, and demodulates, i.e., descrambles the scrambled broadcasting signal and transmits the descrambled broadcasting signal to the broadcasting signal receiving apparatus 100. A user may view a charged channel broadcasting from the broadcasting signal receiving apparatus 100 through the foregoing demodulation process.

The broadcasting signal receiving apparatus 100 processes a broadcasting signal supplied by an external source, for example, an external image supply source according to preset image processing operations and displays an image based on the processed broadcasting signal.

The broadcasting signal receiving apparatus 100 according to an embodiment may be implemented as a TV which displays a broadcasting image based on broadcasting signals, broadcasting information, and/or broadcasting data transmitted by a transmission apparatus of a broadcasting station. However, the spirit of an embodiment is not limited to the foregoing example of the broadcasting signal receiving apparatus 100. In addition to a TV, various types of devices which process images such as a set-top box may implement the broadcasting signal receiving apparatus 100.

The type of an image which is displayable by the broadcasting signal receiving apparatus 100 is not limited to the broadcasting image, and may include a video, still image, applications, on screen display (OSD), a graphic user interface (GUI) to control various operations, based on signals/data transmitted by various signal supply sources (not shown).

The broadcasting signal receiving apparatus 100 may solely process a broadcasting signal supplied from the outside (e.g., a free broadcasting channel) according to preset image processing operations, and display an image based on the processed broadcasting signal.

FIG. 2 is a block diagram of the broadcasting signal receiving apparatus 100 according to an embodiment.

As shown therein, the broadcasting signal receiving apparatus 100 includes a signal receiver 110 which receives a broadcasting signal, a signal processor 120 which processes the broadcasting signal received through the signal receiver 110, a display unit 130 which displays an image thereon based on the broadcasting signal processed by the signal processor 120, an interface 140 to which the CAM 200 is connected, a storage unit 150 which stores therein data/information, and a controller 160 which controls overall operations of the broadcasting signal receiving apparatus 100. The broadcasting signal receiving apparatus 100 may further include a user input unit (not shown) including a remote controller to receive a user's manipulation, and a power supply (not shown) to supply power to components of the broadcasting signal receiving apparatus 100 and the CAM 200.

The signal receiver 110 transmits the received image signal to the signal processor 120.

The signal receiver 110 may be implemented as various types depending on a standard of a received signal or an embodiment type of the broadcasting signal receiving apparatus 100. For example, the signal receiver 110 may receive a broadcasting signal in a wireless manner such as a radio frequency (RF) signal from a broadcasting station (not shown), or receive a broadcasting signal in a wired manner according to standards such as composite video, component video, super video, Syndicat des Constructeurs d'Appareils Radiorécepteurs et Téléviseurs (SCART), or high definition multimedia interface (HDMI). The signal receiver 110 may include a tuner to tune a broadcasting signal by channel.

The signal receiver 110 may receive various image signals from an external apparatus. For example, the image signal may be input by an external apparatus such as a personal computer (PC), an Audio/Video (A/V) device, a portable device such as a smart phone or smart pad, etc. The image signal may result from data transmitted through a network such as the Internet. In this case, the broadcasting signal receiving apparatus 100 may perform network communication through the interface 140, or further include an additional network communication unit. The image signal may otherwise result from data stored in a storage unit 150. The storage unit 150 may be embodied by, for example, non-transitory computer-readable media including magnetic media such as hard disks, floppy disks, and magnetic tape; optical media such as CD ROM disks and DVDs; magneto-optical media such as optical discs; and hardware devices such as read-only memory (ROM), random access memory (RAM), flash memory, USB memory, and the like. The storage unit 150 may be provided within or outside the broadcasting signal receiving apparatus 100. If the storage unit 150 is provided outside the broadcasting signal receiving apparatus 100, the broadcasting signal receiving apparatus 100 may further include a connection unit (not shown) to which the storage unit 150 is connected.

The signal processor 120 processes the broadcasting signal transmitted by the signal receiver 110 according to preset various image processing operations. The signal processor 120 outputs the processed broadcasting signal to the display unit 130, on which an image is displayed on the basis of the broadcasting signal.

As shown in FIG. 2, the signal processor 120 includes a demodulator 121 which demodulates a broadcasting signal of a tuned channel and outputs a signal in the form of a transport stream (TS), a demultiplexer 123 which divides the broadcasting signal into an image signal, an audio signal, and various additional data by nature, a decoder 125 which decodes the TS signal corresponding to an image format of the broadcasting signal receiving apparatus 100, and a scaler 127 which scales the broadcasting signal in compliance with an output standard of the display unit 130. The decoder 125 according to an embodiment may be implemented as a moving picture experts group (MPEG) decoder. However, the present disclosure is not limited thereto, other types of decoder which is capable of decoding the broadcasting signal may be used.

The type of the image processing operations of the signal processor 120 according to an embodiment is not limited to those in FIG. 2, and may include a de-interlacing operation to convert an interlace broadcasting signal into a progressive broadcasting signal, a noise reduction operation to improve an image quality, a detail enhancement operation, a frame refresh rate conversion operation, etc.

The display unit 130 displays an image thereon based on a broadcasting signal which is output by the signal processor 120. The display unit 130 may be implemented as various display panels including liquid crystal, plasma, light-emitting diode (LED), organic light-emitting diode (OLED), surface-conduction electron-emitter, carbon nano-tube, and nano-crystal, but not limited thereto. For example, any other display panels capable of displaying the image based on the broadcasting signal may be used.

The display unit 130 may further include additional components according to its embodiment type. For example, if the display unit 130 includes liquid crystal, the display unit 130 includes an LCD panel (not shown), a backlight unit (not shown) emitting light to the LCD panel, and a panel driving substrate (not shown) to drive the panel.

The divided audio signal may be decoded by an audio decoder (not shown) and output to an output unit such as a speaker (not shown).

The interface 140 is connected to the CAM 200 which descrambles a scrambled broadcasting signal. The interface 140 may include a common interface (CI) slot, and e.g., may be implemented as a Personal Computer Memory Card International Association (PCMCIA) slot, however, it is not limited thereto. For example, the interface 140 may be any other slot that is capable of connecting the CAM 200 to the broadcasting signal receiving apparatus 100.

As described above, the CAM 200 may be an additional module that is detachably connected to the broadcasting signal receiving apparatus 100, and may include a smart card having a conditional access system (CAS) function. The CAM 200 descrambles the scrambled TS signal by demodulating the signal with a control word as a descrambling key, and may store information on de-scramblable channels, valid period information and user information. The CAM 200 descrambles the TS signal transmitted through the interface 140 and transmits the descrambled signal to the broadcasting signal receiving apparatus 100 if it is determined that a user has the right to view a channel of the TS signal.

If the broadcasting signal transmitted through the signal receiver 110 belongs to a charged channel broadcasting, the demodulator 121 demodulates the broadcasting signal, and the TS signal divided by the demultiplexer 123 (scrambled audio/video signal) is transmitted to the CAM 200 through the interface 140. The CAM 200 descrambles the TS signal and outputs the descrambled TS signal to the interface 140.

The descrambled TS signal transmitted to the broadcasting signal receiving apparatus 100 through the interface 140 is decoded by the decoder 125, scaled by the scaler 127 to comply with the specification of the display unit 130, and then output to the display unit 130.

If the received broadcasting signal belongs to a free channel broadcasting, the broadcasting signal is demodulated by the demodulator 121, and the audio/video signal divided by the demultiplexer 123 is transmitted to and decoded by the decoder 125, scaled by the scaler 127, and output to the display unit 130.

The storage unit 150 stores therein data by a control of the controller 160. The storage unit 150 For example, the storage unit 150 may be embodied by, for example, non-transitory computer-readable media including magnetic media such as hard disks, floppy disks, and magnetic tape; optical media such as CD ROM disks and DVDs; magneto-optical media such as optical discs; and hardware devices such as read-only memory (ROM), random access memory (RAM), flash memory, USB memory, and the like. The storage unit 150 is accessed by the controller 160, and data stored therein may be read/recorded/modified/deleted/updated by the controller 160.

The data which are stored in the storage unit 150 include an operating system (OS) to drive the broadcasting signal receiving apparatus 100, and various applications which are executed on the OS, image data, and additional data.

The storage unit 150 may further store therein an optimal timing value at which no noise occurs as a result of timing adjustment for a broadcasting signal which will be described later.

The controller 160 controls various components of the broadcasting signal receiving apparatus 100. For example, the controller 160 controls the signal processor 120 to perform image processing operations, controls the signal receiver 110 or interface 140 to transmit and receive signals/information/data, and performs a corresponding control operation in response to a command from a user input unit (not shown) to thereby control entire operations of the broadcasting signal receiving apparatus 100. The controller 160 determines whether the broadcasting signal received through the signal receiver 110 belongs to a charged or free channel. If the broadcasting signal belongs to a charged channel, the controller 160 transmits the scrambled TS signal to the CAM 200, and receives the descrambled TS signal from the CAM 200.

The controller 160 according to an embodiment monitors the broadcasting signal transmitted by the signal receiver 110 and determines whether there is any noise in the broadcasting signal. More specifically, the controller 160 detects a degree of deterioration in the broadcasting signal based on a bit error rate (BER) of the TS signal demodulated by the demodulator 121 to determine occurrence/non-occurrence of noise. The controller 160 may determine the BER as the ratio of data having error with respect to the demodulated TS signal for predetermined time. The controller 160 may determine occurrence/non-occurrence of noise by using quality of the demodulated signal.

If the BER of the demodulated TS signal is greater than a predetermined threshold 1, the controller 160 determines that the broadcasting signal received through the signal receiver 110 has an error. In this case, as the received broadcasting signal has a noise itself regardless of the descrambling operation of the CAM 200, subsequent noise compensation process including timing adjustment and resetting of the CAM 200 may not be needed.

Accordingly, if it is determined that the broadcasting signal received by the signal receiver 110 has a noise, the controller 160 controls the display unit 130 to display thereon an on screen display (OSD) showing that the initially received broadcasting signal has an error. The controller 160 may control the signal receiver 110 to receive a new broadcasting signal.

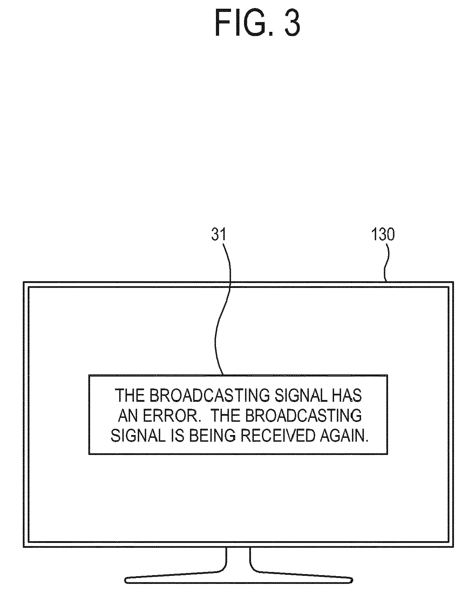

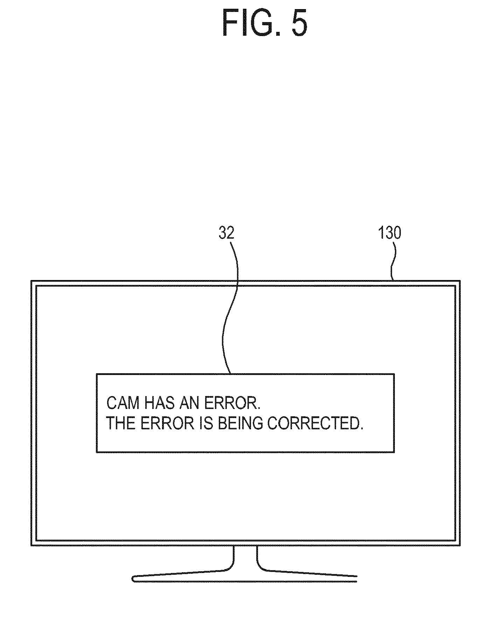

FIGS. 3 and 5 illustrate an example of messages 31 and 32 displayed by the broadcasting signal receiving apparatus 100 according to the embodiment. As shown in FIG. 3, if noise occurs from the TS signal demodulated by the demodulator 121, a message 31 showing that the initially received broadcasting signal has an error and thus a new broadcasting signal is being received, may be displayed on the display unit 130. Thus, upon occurrence of noise in an image displayed on the display unit 130, a user may identify a cause of such noise and recognize that the problem will be solved soon.

Referring back to FIG. 3, the controller 160 according to an embodiment detects the connection of the CAM 200 to the interface 140, monitors the broadcasting signal transmitted by the CAM 200 and determines whether the broadcasting signal has any noise such as screen block noise.

More specifically, the controller 160 may detect the degree of deterioration of the broadcasting signal based on the BER of the signal decoded by the decoder 125 to determine occurrence/non-occurrence of noise. If it is determined that the broadcasting signal has a noise, the image may be broken or the broadcasting signal may be not normally decoded by the decoder 125. Thus, the controller 160 may determine the BER as the ratio of data having error with respect to the decoded data for predetermined time during the data decoding process. The controller 160 may determine occurrence/non-occurrence of noise by using the quality of the decoded signal.

If the BER of the decoded broadcasting signal is greater than a predetermined threshold 2, the controller 160 determines that the broadcasting signal received by the CAM 200 has a noise. In this case, the controller 160 determines that such error has occurred in the course of the descrambling operation by the CAM 200, and control the signal processor 120 to compensate for the error. The controller 160 may adjust timing (e.g. delay) of at least one of a clock signal and a data signal of the broadcasting signal through the demodulator 121 to compensate for the error of the CAM 200.

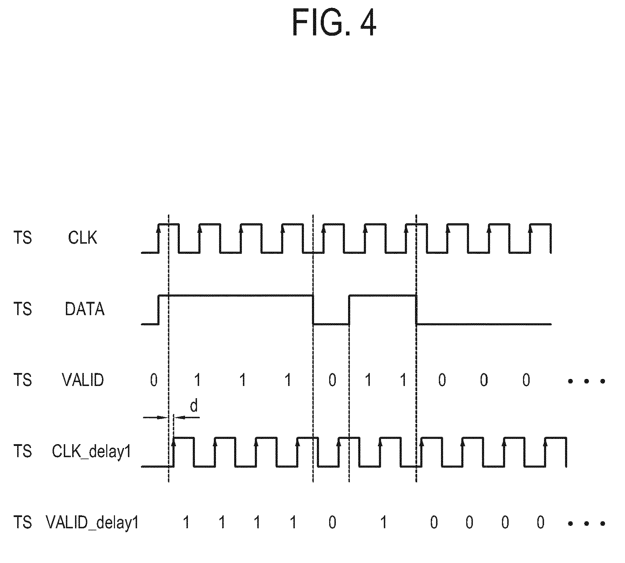

FIG. 4 illustrates an example of a waveform of a broadcasting signal compensated for by the demodulator 121 of the broadcasting signal receiving apparatus 100 according to an embodiment.

As shown therein, the broadcasting signal includes a clock signal TS CLK and a data signal TS DATA, and the controller 160 may read the value of the data signal TS DATA according to a positive edge or negative edge of the clock signal TS CLK and output 1 or o as a result.

For example, if the broadcasting signal receiving apparatus 100 is set to read the value of the data signal TS DATA according to the positive edge of the clock signal TS CLK, if a logic state of the data signal is 1 according to the positive edge of the clock signal as in FIG. 3, 1 is output as output data TS VALID.

If the controller 160 detects that the BER of the decoder 125 drastically increases, it determines that the CAM 200 has an error. Then, the controller 160 adjusts the timing by delaying at least one of the clock signal TS CLK and the data signal TS DATA to thereby compensate for the error.

For example, the controller 160 may delay the timing of the clock signal by the width d corresponding to predetermined time and output the clock signal TS CLK_delay1. The width d by which the clock signal is delayed is set in advance. As in FIG. 4, it may be confirmed that the value of the output data TS VALID_delay1 is changed.

FIG. 4 illustrates an example of adjusting the timing of the clock signal, but an embodiment includes the case of adjusting the timing of the data signal and the case of adjusting the timing of both the clock signal and the data signal.

If it is determined that the broadcasting signal transmitted through the CAM 200 has a noise, the controller 160 controls the interface 140 to reset the CAM 200 in the hardware. More specifically, the controller 160 may turn off power supplied to the CAM 200 and then resume the power supply thereto to reset the CAM 200.

To do so, the storage unit 150 may store therein a CAM reset flag having a value of true (1) or false (0). The controller 160 reads the value of the CAM reset flag, and if the value is true, resets the CAM 200.

The controller 160 according to an embodiment continues to monitor the broadcasting signal received through the CAM 200 until the BER of the TS signal decoded by the decoder 125 is a predetermined value or less and noise does not occur anymore, to thereby adjust timing of the clock signal/data signal or reset the CAM 200.

Until no noise occurs from the TS signal decoded by the decoder 125, the controller 160 may alternately repeat the adjustment of the timing and the resetting of the CAM 200. For example, upon detecting an error from the decoded TS signal, the controller 160 may adjust the timing of the clock signal, and upon detecting another error from the decoded TS signal even after such adjustment of the timing, the controller 160 may control the interface 140 to reset the CAM 200. To do so, the CAM reset flag is set to have a false and true alternately. As the timing adjustment and the resetting are performed alternately until no noise occurs, the error of the CAM 200 may be compensated for in the software.

In the aforementioned embodiment, the timing adjustment is performed prior to the resetting of the CAM 200 when the error is detected from the CAM 200. However, an embodiment also includes the case where the CAM 200 is reset prior to the timing adjustment when the error is initially detected. Also, as the case may be, both the timing adjustment and the resetting of the CAM 200 may be performed when the error is detected from the CAM 200.

If it is determined that the broadcasting signal transmitted by the CAM 200 has a noise, the controller 160 according to an embodiment controls the display unit 130 to display thereon an OSD showing a message 32 to inform the error of the CAM 200. The controller 160 may control the display unit 130 to continue to display the message 32 until no noise occurs as a result of the timing adjustment or the resetting of the CAM 200.

As shown in FIG. 5, if the TS signal decoded by the decoder 125 has a noise, the display unit 130 may display a message 32 thereon showing that the CAM 200 has an error and the error is being corrected. Then, upon occurrence of the noise from the image displayed on the display unit 130, a user may identify the cause of error and recognize that the error will be corrected soon.

If it is determined that the decoded TS signal does not have error anymore, the controller 160 stores a corresponding timing value in the storage unit 150. If the connection of the same CAM 200 is detected in the future, the controller 160 controls the signal processor 120 to delay at least one of the clock signal and data signal through the stored timing value. If no noise occurs as a result of the resetting of the CAM 200 without timing adjustment, the timing value may be stored as o.

Accordingly, a one-time compensation process may be performed upon the initial connection of the CAM 200 to thereby prevent any inconvenience due to repeated unnecessary compensation processes.

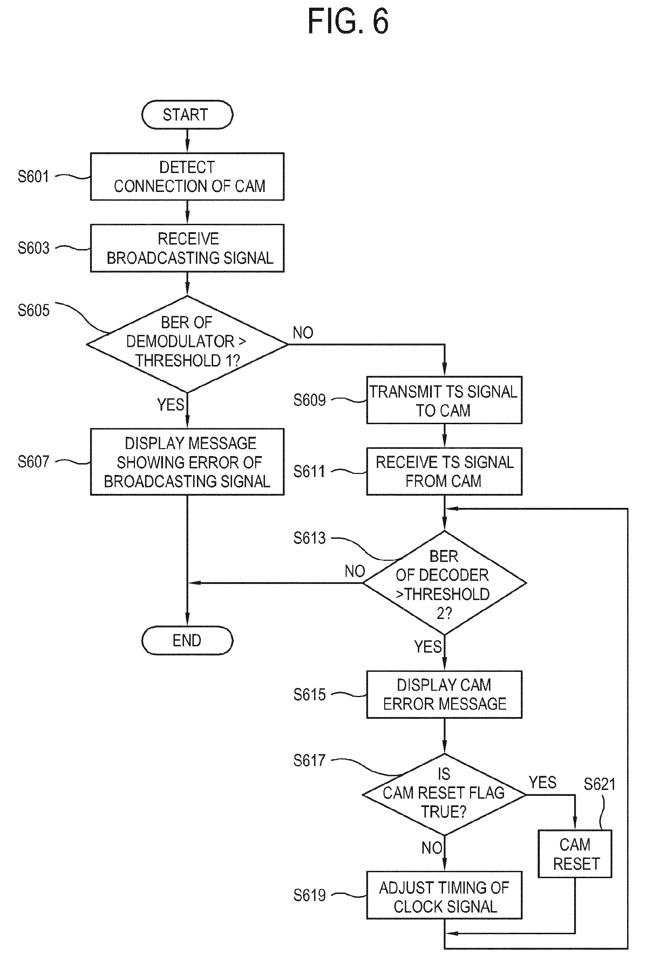

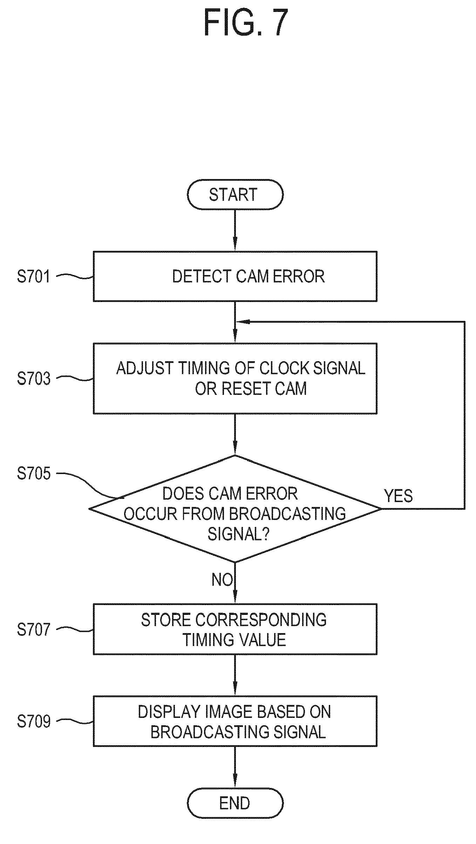

Hereinafter, a control method of the broadcasting signal receiving apparatus 100 according to an embodiment will be described with reference to FIGS. 6 and 7. FIG. 6 is a flowchart showing a control method of the broadcasting signal receiving apparatus 100 according to an embodiment.

As shown therein, the connection of the CAM 200 to the interface 140 of the broadcasting signal receiving apparatus 100 is detected (S601).

The signal receiver 110 receives a broadcasting signal from the outside (S603).

The controller 160 determines whether the broadcasting signal received at operation S603 has error (S605). The broadcasting signal received at operation S603 is demodulated into the TS signal by the demodulator 121 and if the BER of the TS signal demodulated by the demodulator 121 is larger than a threshold 1, the controller 160 may determine that the broadcasting signal received from the outside has an error.

If it is determined at operation S605 that the broadcasting signal has the error, the controller 160 displays on the display unit 130 the broadcasting signal error message 31 as in FIG. 3 (S607).

If it is determined at operation S605 that the broadcasting signal has no error, i.e., if the broadcasting signal received from the outside has no problem, the broadcasting signal received at operation S603 and demodulated into the TS signal by the demodulator 121, is transmitted to the CAM 200 through the interface 140 (S609). The TS signal may be transmitted in a scrambled form corresponding to the charged channel to which only a conditional access is possible. The CAM 200 receives the scrambled TS signal, and if a user has the viewing right, descrambles the scrambled TS signal and transmits the descrambled TS signal to the broadcasting signal receiving apparatus 100 through the interface 140. In addition, the CAM 200 may transmit the non-scrambled TS signal to the broadcasting signal receiving apparatus 100 through the interface.

The controller 160 receives the descrambled TS signal from the CAM 200 (S611).

The controller 160 determines whether the TS signal transmitted at operation S611 has a noise (S613). The received descrambled TS signal is decoded by the decoder 125 and if the BER of the TS signal decoded by the decoder 125 is larger than a threshold 2, the controller 160 may determine that the broadcasting signal transmitted by the CAM 200 has the noise and the CAM 200 has the error.

If it is determined at operation S613 that noise has occurred, the controller 160 displays on the display unit 130 the CAM error message 32 as in FIG. 5 (S615).

If it is determined at operation S613 that noise has occurred, the controller 160 identifies whether the CAM reset flag is true (S617).

If the CAM reset flag is identified as false at operation S617, the controller 160 controls the demodulator 121 to adjust the timing of the clock signal (S619). However, although only adjusting of the timing of the clock signals is shown here, the controller 160 may adjust the timing of at least one of the clock signal and the data signal. If the timing adjustment is completed, the CAM reset flag is changed to true.

If the CAM reset flag is identified as true at operation S617, the controller 160 controls the interface 140 to reset the CAM 200 (S621). If the resetting is completed, the CAM reset flag is changed to false.

As the value of the CAM reset flag has been changed, the operations S619 and S621 may be performed alternately.

After the operation S619 or S621 has been performed, the controller 160 determines again whether the broadcasting signal transmitted by the CAM 200 at operation S613 has a noise. Until it is determined that no noise has occurred at operation S613, the controller 160 alternately performs the operations S619 and S621 to compensate for the error of the CAM 200.

FIG. 7 is a flowchart showing a control method of a broadcasting signal receiving apparatus 100 according to another embodiment.

As shown therein, the controller 160 may detect an error from the CAM (S701). The error of the CAM may be detected by using the BER of the decoded signal as shown in operation S613 in FIG. 6.

If the error of the CAM is detected at operation S701, the controller 160 adjusts the timing of the clock signal in the software, or resets the CAM 200 in the hardware (S703). However, although only adjusting of the timing of the clock signals is shown here, the controller 160 may adjust the timing of at least one of the clock signal and the data signal.

After the operation S703 has been performed, the controller 160 determines again whether any error has occurred from the CAM, in the same manner as shown in operation S701 (S705).

If it is determined at operation S705 that no error occurs from the CAM any more, the controller 160 stores a corresponding timing value in the storage unit 150 (S707).

The controller 160 transmits the TS signal whose timing has been adjusted by the demodulator 121, to the CAM 200 through the demultiplexer 123, and receives the descrambled broadcasting signal from the CAM 200. The received broadcasting signal is decoded by the decoder 125, scaled by the scaler 127, and displayed as an image on the display unit 130 (S709). The displayed image has no noise since the noise has been removed by the compensation process at operation S703. Accordingly, a user may view charged channel broadcasting with clear picture quality.

According to an embodiment, the broadcasting signal receiving apparatus 100 to which the CAM 200 is connected adjusts the timing of at least one of the clock signal and data signal of the demodulator 121 in the software, and thus the noise due to the CAM 200 may automatically be compensated for.

Also, the broadcasting signal receiving apparatus 100 may detect any noise included in the broadcasting signal transmitted from the outside and thus prevent performance of unnecessary compensation process.

Also, the broadcasting signal receiving apparatus 100 alternately adjusts the timing in the software and resets the CAM in the hardware until no noise occurs, to more efficiently compensate for noise.

Also, the broadcasting signal receiving apparatus 100 may store the optimal timing value that is obtained as a result of the compensation, and may not perform the same repetitive compensation process by using the timing value if the same CAM 200 is connected thereto in the future.

Although a few exemplary embodiments have been shown and described, it will be appreciated by those skilled in the art that changes may be made in these exemplary embodiments without departing from the principles of the invention, the range of which is defined in the appended claims.

## Claims

1. A broadcasting signal receiving apparatus comprising:
a signal receiver which receives a broadcasting signal;
a signal processor which processes the received broadcasting signal;
an interface to which a conditional access module CAM that descrambles a scrambled broadcasting signal is connected; and
a controller which, if the connection of the CAM through the interface is detected, monitors the broadcasting signal transmitted by the CAM, and if a noise occurs from the broadcasting signal transmitted by the CAM, controls the signal processor to adjust a timing of at least one of a clock signal and a data signal of the broadcasting signal.

2. The broadcasting signal receiving apparatus according to claim 1, wherein the signal processor comprises a demodulator which demodulates the broadcasting signal received by the signal receiver, and a decoder which decodes the demodulated broadcasting signal, and the controller controls the interface to transmit the broadcasting signal demodulated by the demodulator, to the CAM, and to receive the descrambled broadcasting signal from the CAM, and controls the decoder to decode the broadcasting signal transmitted by the CAM.

3. The broadcasting signal receiving apparatus according to claim 2, wherein the controller determines through the broadcasting signal processed by the decoder whether any noise occurs from the broadcasting signal transmitted by the CAM, and if any error occurs from the decoder, adjusts a timing of the broadcasting signal processed by the demodulator.

4. The broadcasting signal receiving apparatus according to claim 2 or 3, further comprising a display unit which displays an image thereon based on the broadcasting signal processed by the signal processor, wherein if any noise occurs from the broadcasting signal transmitted by the CAM, the controller controls the display unit to display a message thereon showing the occurrence of the error from the CAM.

5. The broadcasting signal receiving apparatus according to claim 4, wherein the controller further determines whether any noise occurs from the broadcasting signal received by the signal receiver.

6. The broadcasting signal receiving apparatus according to claim 5, wherein the controller uses the broadcasting signal processed by the demodulator to determine whether any noise occurs from the broadcasting signal received by the signal receiver.

7. The broadcasting signal receiving apparatus one of claims 1 to 6, wherein if any noise occurs from the broadcasting signal transmitted by the CAM, the controller controls the interface to reset the CAM.

8. The broadcasting signal receiving apparatus according to claim 7, wherein until no noise occurs from the broadcasting signal transmitted by the CAM, the controller alternately adjusts the timing and resets the CAM.

9. A control method of a broadcasting signal receiving apparatus, the control method comprising:
detecting a connection of a conditional access module CAM which descrambles a scrambled broadcasting signal;
receiving a broadcasting signal;
transmitting the received broadcasting signal to the CAM;
receiving the descrambled broadcasting signal from the CAM;
monitoring the broadcasting signal transmitted by the CAM; and
adjusting a timing of at least one of a clock signal and a data signal of the broadcasting signal if any noise occurs from the broadcasting signal transmitted by the CAM.

10. The control method according to claim 9, further comprising:
demodulating the received broadcasting signal; and
decoding the broadcasting signal transmitted by the CAM.

11. The control method according to claim 10, further comprising:
determining whether any noise occurs from the broadcasting signal transmitted by the CAM by using a broadcasting signal processed by a decoder,
wherein the adjusting of the timing comprises adjusting a timing of the broadcasting signal processed by a demodulator if any error occurs from the decoder.

12. The control method according to claim 10 or 11, further comprising displaying a message showing an occurrence of an error from the CAM if any noise occurs from the broadcasting signal transmitted by the CAM.

13. The control method according to claim 11 or 12, further comprising determining whether any noise occurs from a broadcasting signal received by a signal receiver by using a broadcasting signal processed by the demodulator.

14. The control method according to one of claims 9 to 13, wherein the adjusting of the timing further comprises resetting the CAM.

15. The control method according to claim 14, wherein the adjusting the timing comprises alternately adjusting the timing and resetting the CAM until no noise occurs from the broadcasting signal transmitted by the CAM.
